Europäisches Patentamt

European Patent Office

Office européen des brevets

(11) Veröffentlichungsnummer: **0 478 027 A1**

# EUROPÄISCHE PATENTANMELDUNG

(21) Anmeldenummer: **91202118.5**

(22) Anmeldetag: **20.08.91**

(51) Int. Cl.5: **H01R 13/64**, G02B 6/38

(30) Priorität: **24.08.90 DE 4026709**

(43) Veröffentlichungstag der Anmeldung:
**01.04.92 Patentblatt 92/14**

(84) Benannte Vertragsstaaten:
**DE FR GB IT**

(71) Anmelder: **Philips Patentverwaltung GmbH
Wendenstrasse 35 Postfach 10 51 49
W-2000 Hamburg 1(DE)**
(84) **DE**

(71) Anmelder: **N.V. Philips' Gloeilampenfabrieken
Groenewoudseweg 1**

**NL-5621 BA Eindhoven(NL)**
(84) **FR GB IT**

(72) Erfinder: **Eutin, Wolfgang
Glücksburgstrasse 7
W-5000 Köln 80(DE)**
Erfinder: **Groll, Bernhard
Deutscher Platz 1
W-5354 Weierswist(DE)**

(74) Vertreter: **Koch, Ingo, Dr.-Ing. et al
Philips Patentverwaltung GmbH
Wendenstrasse 35 Postfach 10 51 49
W-2000 Hamburg 1(DE)**

(54) **Optische Steckverbindung.**

(57) Die Erfindung betrifft eine optische Steckverbindung mit zwei Steckern (1,2), welche jeweils ein Ende eines Lichtwellenleiters (LWL 10) halten und welche bis zur Aneinanderlage der Stirnflächen der LWL (10) von gegenüberliegenden Seiten in eine Kupplungshülse (7) einsteckbar sind, sowie mit einem Richtelement (5,9) zur Führung und Ausrichtung der LWL (10), welches in beide Stecker (1,2) axial einfügbar ist und deren Verbindungsbereich übergreift. Eine Beschädigung der LWL infolge eines unsachgemäßen Versuchs zur Herstellung einer Steckverbindung ohne Richtelement wird dadurch vermieden, daß an den Steckern Sperrelemente (17,18) vorgesehen sind, welche mit den Sperrelementen (17,18) des jeweils anderen Steckers derart zusammenwirken, daß bei nicht eingefügtem Richtelement (9) eine vollständige axiale Zueinanderbewegung zumindest von die LWL (10) haltenden Bauelementen (12) der Stecker verhindert ist.

FIG.1

EP 0 478 027 A1

Die Erfindung bezieht sich auf eine optische Steckverbindung mit zwei Steckern, welche jeweils ein Ende eines Lichtwellenleiters (LWL) halten und welche bis zur Aneinanderlage der Stirnflächen der LWL von gegenüberliegenden Seiten in eine Kupplungshülse einsteckbar sind, sowie mit einem Richtelement zur Führung und Ausrichtung der LWL, welches in beide Stecker axial einfügbar ist und deren Verbindungsbereich übergreift.

Eine derartige Steckverbindung ist in der DE-OS 37 11 965 beschrieben. Es kann geschehen, daß zwei Stecker in einer Kupplungshülse aneinander gesteckt werden, ohne daß vorher ein Richtelement in einen der Stecker eingebracht wurde. Dabei ist es möglich, daß die dann nicht geführten LWL-Stirnflächen unkontrolliert gegeneinander oder gegen Steckerbauteile stoßen, so daß die empfindlichen Stirnflächen der LWL beschädigt werden.

Der Erfindung liegt die Aufgabe zugrunde, eine Beschädigung der LWL infolge eines unsachgemäßen Versuchs zur Herstellung einer Steckverbindung ohne Richtelement zu vermeiden.

Die Lösung gelingt dadurch, daß an den Steckern Sperrelemente vorgesehen sind, welche mit den Sperrelementen des jeweils anderen Steckers derart zusammenwirken, daß bei nicht eingefügtem Richtelement eine vollständige axiale Zueinanderbewegung zumindest von die LWL haltenden Bauelementen der Stecker verhindert ist.

Wenn die Einfügung des Richtelements vergessen wurde, kann man wegen der erfindungsgemäß vorgesehenen Sperrelemente die Stecker nicht mehr vollständig aneinanderfügen, so daß dann auch die Stirnflächen der LWL nicht mehr gegeneinander oder gegen andere Steckerbauteile stoßen können.

Eine vorteilhafte Ausführungsform ist dadurch gekennzeichnet, daß an den Steckern Sperrvorsprünge und korrespondierende Ausnehmungen derart angeordnet sind, daß bei eingefügtem Richtelement die Sperrvorsprünge des einen Steckers in die Ausnehmungen des anderen Steckers passen, und daß die Sperrvorsprünge und/oder Ausnehmungen bei nicht eingebrachtem Richtelement in eine solche Lage verschoben sind, daß die Sperrvorsprünge des einen Steckers nicht mehr in die Ausnehmung des anderen Steckers passen. Dabei können radial abstehende Sperrvorsprünge in axiale Schlitze des Gegensteckers oder axiale Vorsprünge eines Steckers in axiale Ausnehmungen des Gegensteckers eingreifen.

Die Verhinderung einer im Falle des Fehlens eines Richtelements zu weiten Zueinanderbewegung der Stecker kann durch Verschiebung der Lage der Sperrelemente bzw. der Ausnehmungen oder durch Blockierung der Ausnehmungen bzw. Schlitze erfolgen. Durch Einfügen des Richtelements in einen Stecker werden die Verschiebungen oder Blockierungen rückgängig gemacht.

Eine insbesondere für eine durch die DE-OS 37 11 965 bekannte Steckverbindung geeignete Lösung besteht darin, daß ein die LWL tragendes und im Stecker elastisch bewegliches Halteelement mindestens einen axial gerichteten Sperrvorsprung und mindestens eine axiale Ausnehmung aufweist.

Für die Anbringung und für den Betätigungsmechanismus der Sperrvorsprünge und Ausnehmungen ist dann kein nennenswerter Mehraufwand erforderlich.

Die Erfindung wird anhand der Beschreibung eines in der Zeichnung dargestellten bevorzugten Ausführungsbeispiels näher erläutert.

Fig. 1    zeigt das Prinzip einer bekannten gattungsgemäßen Steckverbindung,

Fig. 2    zeigt perspektivisch den Endbereich eines erfindungsgemäß gestalteten Steckers, teilweise geschnitten,

Fig. 3    zeigt die Stirnansicht eines Steckers nach Fig. 2

Fig. 4    zeigt den Stecker nach Fig. 3 ohne Richtelement.

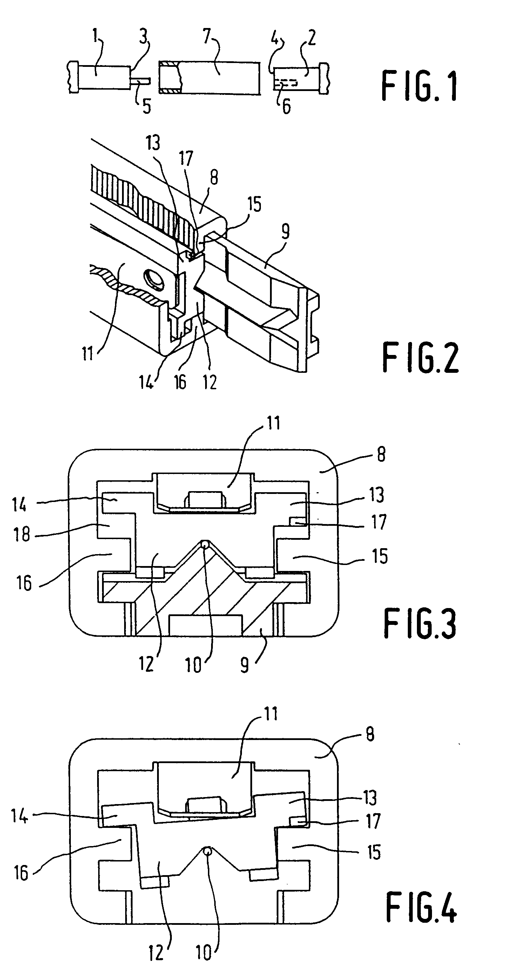

Gemäß Fig. 1 sind zwei optische Stecker 1 und 2 von gegenüberliegenden Seiten in eine Hülse 7 derart steckbar, daß sie mit ihren Stirnflächen 3 und 4 aneinanderliegen. Dabei dringt der aus dem Stecker 1 ragende Teil des Richtelements 5 in die zugehörige Öffnung des Steckers 2 ein.

Einzelheiten eines Steckers 1 zeigt Fig. 2. In eine Führungsöffnung des Steckergehäuses 8 ist ein Richtelement 9 bis zu einem Anschlag eingeschoben. Der aus dem Gehäuse 8 herausragende Teil des Richtelements 9 ist in eine entsprechende Führungsöffnung (vgl. Pos. 6 in Fig. 1) eines Gegensteckers einführbar. Das wird durch Einführungsschrägen der vorderen Konturen des Richtelements 9 erleichtert.

In den Grund einer V-Nut der Halterung 12 ist ein LWL 10 eingeklebt, wie es in den Figuren 3 und 4 erkennbar ist. Die Halterung 12 wird durch eine Feder 11 auf das Richtelement 9 gedrückt, dadurch wird der LWL 10 in eine auf der Gradspitze des Richtelements 9 vorgesehene V-Nut gelegt (Fig. 3). Die Stirnflächen der LWL 10 ragen bei beiden Steckern geringfügig über die Stirnflächen der Halterungen 12 hervor. In der V-Nut des Richtelements wird der LWL eines Gegensteckers mit dessen Stirnfläche an die Stirnfläche des LWL 10 geschoben. Dabei können die Halterungen 12 beider Stecker entgegen einer Federkraft zurückgedrückt werden.

Die Halterung 12 ist allseitig mit Spiel gegen Nachbarwandungen des Steckergehäuses 8 geführt. Ohne ein geführtes Richtelement (Fig. 4) drückt die Feder 11 die Halterung 12 mit dem hohen Ansatz 13 und dem niedrigen Ansatz 14 auf benachbarte Schienen 15 bzw. 16 des Steckergehäuses 8, so daß die Halterung 12 schräg im Gehäuse 8 liegt. Würde man in dieser Konfiguration eine Verbindung mit einem ebenfalls kein Richtelement 9 tragenden Gegenstecker versuchen, würden axiale Sperrnocken 17 gegen einen niedergedrückten flachen Ansatz 14 des Gegensteckers stoßen. Ebenso würde ein axialer Sperrnocken 17 des Gegensteckers gegen den flachen Ansatz 14 stoßen. Ein vollständiges axiales Zueinanderführen der Halterungen wäre verhindert, obgleich die Steckergehäuse 8 entgegen den zwischen den Halterungen 12 und den Steckergehäusen wirkenden Federkräften aneinandergedrückt werden könnten.

Durch Einbringen des Richtelements 9 in einen der zu koppelnden Stecker (vgl. Fig. 1) wird die Halterung 12 entgegen dem Druck der Feder 11 in eine Stellung nach Fig. 3 angehoben. In dieser Lage paßt der Sperrnocken 17 in eine Öffnung 18 eines Gegensteckers, dessen Halterung 12 beim Kupplungsvorgang ebenfalls durch das Richtelement 9 angehoben wird. Umgekehrt paßt dann der Sperrnocken 17 in eine Öffnung 18 des Gegensteckers. Eine Vollendung des Kupplungsvorganges bis zum Aneinanderstoßen der Stirnflächen der LWL 10 ist damit möglich.

**Patentansprüche**

1.  Optische Steckverbindung mit zwei Steckern (1,2), welche jeweils ein Ende eines Lichtwellenleiters (LWL 10) halten und welche bis zur Aneinanderlage der Stirnflächen der LWL (10) von gegenüberliegenden Seiten in eine Kupplungshülse (7) einsteckbar sind, sowie mit einem Richtelement (5,9) zur Führung und Ausrichtung der LWL (10), welches in beide Stecker (1,2) axial einfügbar ist und deren Verbindungsbereich übergreift,
    dadurch gekennzeichnet, daß an den Steckern Sperrelemente (17,18) vorgesehen sind, welche mit den Sperrelementen (17,18) des jeweils anderen Steckers derart zusammenwirken, daß bei nicht eingefügtem Richtelement (9) eine vollständige axiale Zueinanderbewegung zumindest von die LWL haltenden Bauelementen der Stecker verhindert ist.

2.  Optische Steckverbindung nach Anspruch 1, dadurch gekennzeichnet, daß an den Steckern Sperrvorsprünge (17) und korrespondierende Ausnehmungen (18) derart angeordnet sind, daß bei eingefügtem Richtelement (9) die Sperrvorsprünge (17) des einen Steckers in die Ausnehmungen (18) des anderen Steckers passen, und daß die Sperrvorsprünge (17) und/oder Ausnehmungen (18) bei nicht eingebrachtem Richtelement (9) in eine solche Lage verschoben sind, daß die Sperrvorsprünge (17) des einen Steckers nicht mehr in die Ausnehmung (18) des anderen Steckers passen.

3.  Optische Steckverbindung nach Anspruch 2, dadurch gekennzeichnet, daß ein die LWL (10) tragendes und im Stecker elastisch bewegliches Halteelement (12) zumindest einen axial gerichteten Sperrvorsprung (17) und mindestens eine axiale Ausnehmung (18) aufweist.

FIG.1

FIG.2

FIG.3

FIG.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 293 949 (PHILIPS PATENTVERWALTUNG et al.) * Zusammenfassung; Spalte 5, Zeile 40 - Spalte 6, Zeile 1; Spalte 6, Zeile 52 - Spalte 7, Zeile 39; Abbildungen 2,3,5 *; & DE - A - 3711965 (Kat. D) – – – | 1 | H 01 R 13/64 G 02 B 6/38 |
| A | EP-A-0 064 618 (TOYOTA JIDOSHA et al.) * Zusammenfassung; Seite 2, Zeile 11 - Seite 3, Zeile 3; Seite 4, letzter Absatz - Seite 5, Absatz 2; Abbildung 1-6 * – – – | 1 | |
| A | US-A-4 186 997 (SCHUMACHER) * Zusammenfassung; Abbildung 8,10; Spalte 6, Zeilen 32-59 * – – – | 1 | |
| A,P | EP-A-0 440 447 (THOMAS & BETTS) * Zusammenfassung; Abbildung 1 * – – – – – | 1 | |

| | RECHERCHIERTE SACHGEBIETE (Int. Cl.5) |
|---|---|
| | H 01 R G 02 B |

Der vorliegende Recherchenbericht wurde für alle Patentansprüche erstellt

| Recherchenort | Abschlußdatum der Recherche | Prüfer |
|---|---|---|
| Berlin | 19 November 91 | HYLLA W R |